# EUROPEAN PATENT APPLICATION

(11) **EP 4 848 517 A1**
(43) Date of publication of application: **02.12.2026**
(21) Application number: 24782430.3
(22) Date of filing: 21.06.2024
(51) Int. Cl.: H02J 3/38

(54) **GRID-CONNECTED CONTROL METHOD AND APPARATUS FOR FLYBACK CONVERTER, AND COMPUTER DEVICE**

(30) Priority: 26.01.2024 CN 202410110007
(71) Applicant: SHENZHEN POWEROAK NEWENER CO., LTD, Shenzhen, Guangdong 518000 (CN)
(72) Inventor: QIN, Geng, Shenzhen, Guangdong 518000 (CN); MA, Hui, Shenzhen, Guangdong 518000 (CN); HAO, Chuantong, Shenzhen, Guangdong 518000 (CN); ZHANG, Yongbo, Shenzhen, Guangdong 518000 (CN); GUO, Zhihua, Shenzhen, Guangdong 518000 (CN)
(74) Representative: Balder IP Law, S.L.
(86) International application number: PCT/CN2024/100662
(87) International publication number: WO 2025/156555

(57) **Abstract**

The present disclosure relates to a grid-connected control method and device for a flyback converter, and a computer apparatus. The method includes: obtaining grid-connected parameters of the flyback converter, and an upper frequency limit and a lower frequency limit of a power switch in the flyback converter; determining a number of resonance valleys of the power switch according to the grid-connected parameters, the upper frequency limit, and the lower frequency limit; obtaining a switching frequency of the power switch according to the grid-connected parameters and the number of resonance valleys; and controlling the power switch according to the switching frequency. This method can improve the safety.

## Description

### CROSS-REFERENCE TO RELATED APPLICATIONS

The present application claims priority to Chinese patent application No. 2024101100072, titled "GRID-CONNECTED CONTROL METHOD AND DEVICE FOR FLYBACK CONVERTER, AND COMPUTER APPARATUS", filed on January 26, 2024, the entire content of which is incorporated herein by reference.

### TECHNICAL FIELD

The present disclosure relates to the field of circuit technologies, and in particular, to a grid-connected control method and device for a flyback converter, and a computer apparatus.

### BACKGROUND

Flyback converters are widely used due to their high-frequency electrical isolation, simple structure, and low cost. The flyback converter has a boundary conduction mode (BCM) and a discontinuous conduction mode (DCM).

If a flyback converter operates in the BCM, at a light load, for example, when a grid voltage is at a zero-crossing point, a switching frequency of a power switch is very high, resulting in a large switching loss of the power switch. If the flyback converter operates in the DCM with a constant switching frequency, at a heavy load, for example, when the grid voltage reaches near a peak point, a current stress of the power switch is very large. Therefore, the current switching frequency control method has the problem of low safety.

### SUMMARY

Based on this, to address the above technical problems, it is necessary to provide a grid-connected control method and device for a flyback converter, and a computer apparatus that can improve safety.

In a first aspect, the present disclosure provides a grid-connected control method for a flyback converter, including:
obtaining grid-connected parameters of the flyback converter, and an upper frequency limit and a lower frequency limit of a power switch in the flyback converter;
determining a number of resonance valleys of the power switch according to the grid-connected parameters, the upper frequency limit, and the lower frequency limit;
obtaining a switching frequency of the power switch according to the grid-connected parameters and the number of resonance valleys; and
controlling the power switch according to the switching frequency.

In a second aspect, the present disclosure further provides a grid-connected control device for a flyback converter, including:
a first obtaining module configured to obtain grid-connected parameters of the flyback converter, and an upper frequency limit and a lower frequency limit of a power switch in the flyback converter;
a first determination module configured to determine a number of resonance valleys of the power switch according to the grid-connected parameters, the upper frequency limit, and the lower frequency limit;
a second determination module configured to obtain, according to the grid-connected parameters and the number of resonance valleys, a switching frequency of the power switch; and
a control module configured to control, according to the switching frequency, the power switch.

In a third aspect, the present disclosure further provides a computer apparatus, including a processor and a memory storing a computer program. The processor, when executing the computer program, implements the steps of any of the above methods.

In a fourth aspect, the present disclosure further provides a computer-readable storage medium, having a computer program stored therein. The computer program, when executed by a processor, causes the processor to implement the steps of any of the above methods.

In a fifth aspect, the present disclosure further provides a computer program product, including a computer program. The computer program, when executed by a processor, causes the processor to implement the steps of any of the above methods.

In the grid-connected control method and device for the flyback converter, and the computer apparatus as described above, since the grid-connected parameters of the flyback converter, the upper frequency limit and the lower frequency limit of the power switch in the flyback converter are obtained, and the number of resonance valleys of the power switch is determined according to the grid-connected parameters, the upper frequency limit and the lower frequency limit, the power switch may be controlled according to the switching frequency after obtaining the switching frequency of the power switch according to the grid-connected parameters and the number of resonance valleys. In addition, since the number of resonance valleys is determined according to the upper frequency limit and the lower frequency limit, the switching frequency can be determined to be not less than the lower frequency limit and not greater than the upper frequency limit, thus solving the problem of the large switching loss caused by excessively high switching frequency in the conventional art. Moreover, since the flyback converter operates at a variable switching frequency, it does not cause large current stress, thereby improving safety.

### BRIEF DESCRIPTION OF THE DRAWINGS

In order to describe the technical solutions of the embodiments of the present disclosure or the related art more clearly, the accompanying drawings required for describing the embodiments or for describing the related art will be briefly introduced as follows. Apparently, the accompanying drawings, in the following description, illustrate merely some embodiments of the present disclosure, for a person of ordinary skill in the art, other drawings can also be obtained according to these accompanying drawings without creative efforts.
FIG. 1 is a schematic diagram showing a topological structure of a two-stage flyback converter.
FIG. 2 is a schematic diagram showing a boundary conduction mode.
FIG. 3 is a schematic diagram showing a discontinuous conduction mode.
FIG. 4 is a diagram showing an application environment of a grid-connected control method for a flyback converter in an embodiment of the present disclosure.
FIG. 5 is a flow diagram showing a grid-connected control method for a flyback converter in an embodiment of the present disclosure.
FIG. 6 is a flow diagram showing a method for determining a switching frequency in an embodiment of the present disclosure.
FIG. 7 is a flow diagram showing a method for determining a switching frequency in another embodiment of the present disclosure.
FIG. 8 is a schematic diagram showing a principle of a valley switch in an embodiment of the present disclosure.
FIG. 9 is a flow diagram showing a method for determining a number of resonance valleys in an embodiment of the present disclosure.
FIG. 10 is a flow diagram showing a method for controlling a switching frequency in an embodiment of the present disclosure.
FIG. 11 is a schematic diagram showing a control process in an embodiment of the present disclosure.
FIG. 12 is a flow diagram showing a method for determining a switching frequency in another embodiment of the present disclosure.
FIG. 13 is a schematic diagram showing a process of a grid-connected control method for a flyback converter in an embodiment of the present disclosure.
FIG. 14 is a diagram showing a simulation effect in an embodiment of the present disclosure.
FIG. 15 is a schematic diagram showing electric power parameters in an embodiment of the present disclosure.
FIG. 16 is a block diagram showing a configuration of a grid-connected control device for a flyback converter in an embodiment of the present disclosure.
FIG. 17 is a diagram showing an internal configuration of a computer apparatus in an embodiment of the present disclosure.

### DETAILED DESCRIPTION OF THE EMBODIMENTS

In order to make the objectives, technical solutions and advantages of the present disclosure more clearly understood, the disclosure will be further described in detail with the accompanying drawings and embodiments. It should be understood that the specific embodiments described herein are only used to explain the disclosure and not to limit the disclosure.

Flyback converters can provide insulation isolation between an input stage and an output stage, so they are widely used in the field of circuitry. The following description takes a two-stage flyback converter as an example. The principles of other types of flyback converters are similar and will not be repeated here.

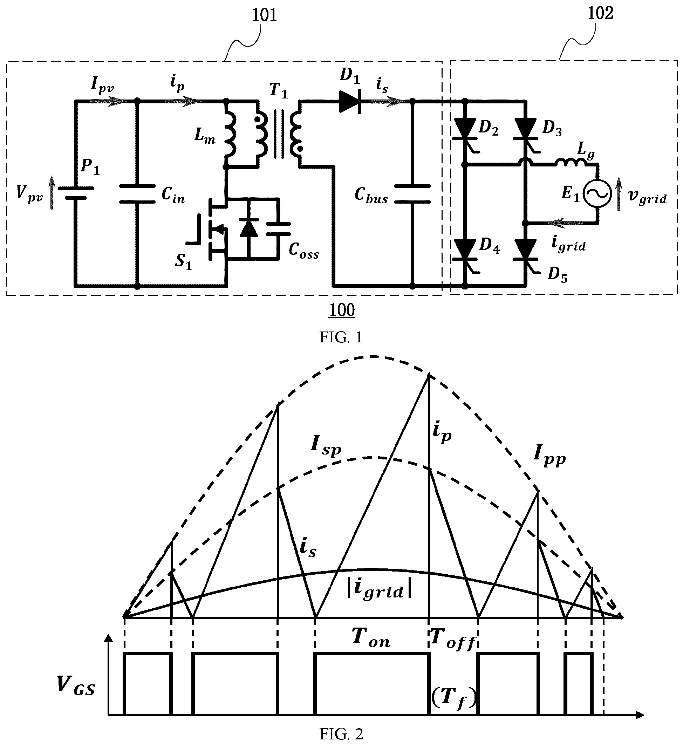

FIG. 1 is a schematic diagram showing a topological structure of a two-stage flyback converter. As shown in FIG. 1, the flyback converter 100 includes a first-stage structure 101 and a second-stage structure 102. The first-stage structure 101 includes a power supply P1, a filter capacitor *Cᵢₙ,* and a flyback converter. The power supply P1 includes but is not limited to a photovoltaic panel. The flyback converter includes a power switch S1, a transformer T1, and a diode D1.

The filter capacitor *Cᵢₙ* is connected to an input of the flyback converter. The power switch S1 is configured to control an energy transmission of a flyback topology to reduce a second harmonic current caused by an unbalanced instantaneous power between the power supply and an electricity grid. In a case that the power supply P1 is a photovoltaic panel, the first-stage structure 101 can also achieve maximum power point tracking (MPPT).

The second-stage structure 102 includes a bus capacitor *C_{bus},* a full-bridge inverter circuit composed of thyristors D2 to D5, and an electricity grid E1. The absolute values of an output voltage of the flyback converter, a voltage of the bus capacitor *C_{bus},* and the grid voltage are equal. A high-frequency component in a secondary current *iₛ* of the transformer is filtered by a grid inductor *L_{g}*.

With continued reference to FIG. 1, in a case that the power switch S1 is turned on, a primary-side current *iₚ* starts to increase linearly. Once the primary-side current *iₚ* increases to be equal to a primary-side peak current *Iₚₚ* of the flyback converter, the power switch S1 is turned off. In this case, a magnetic inductance of the transformer T1 is denoted as *Lₘ*, a supply voltage of the power supply P1 is denoted as *Vₚᵥ,* and according to an inductance and current formula, a turn-on time *Tₒₙ* of the power switch S1 satisfies the following formula (1): ${T}_{on} = \frac{{L}_{m}}{{V}_{pv}} {I}_{pp}$ (1).

In a case that the power switch S1 is turned off, the diode D1 on a secondary-side of the transformer is turned on. The energy in the primary-side magnetic inductance is transferred to the secondary-side through the transformer T1, so that the secondary current *iₛ* of the diode D1 on the secondary-side decreases linearly, and a secondary-side voltage of the transformer is equal to the absolute value of the grid voltage *v_{grid}.* In this case, a turns ratio of the transformer is denoted as *Nₛₚ,* and a fall time required for the secondary current *iₛ* of the diode D1 to fall to zero is denoted as *T_{f},* satisfying the following formula (2): ${T}_{f} = \frac{{L}_{m}}{\left|{v}_{grid}\right| / {N}_{sp}} {I}_{pp}$ (2).

Ideally, to reduce total harmonic distortion, a grid current *I_{grid}* is sinusoidal and has a same phase angle *θ_{grid}* as the grid voltage. In a single switching period *T_{sw}* of the power switch S1, an average value of the current of the diode on the secondary-side should be equal to an instantaneous value of the grid current. The instantaneous value |*i_{grid}*| of the grid current satisfies the following formula (3): $\left|{i}_{grid}\right| = \frac{1}{2} \frac{{I}_{pp}}{{N}_{sp}} \frac{{T}_{f}}{{T}_{sw}}$ (3).

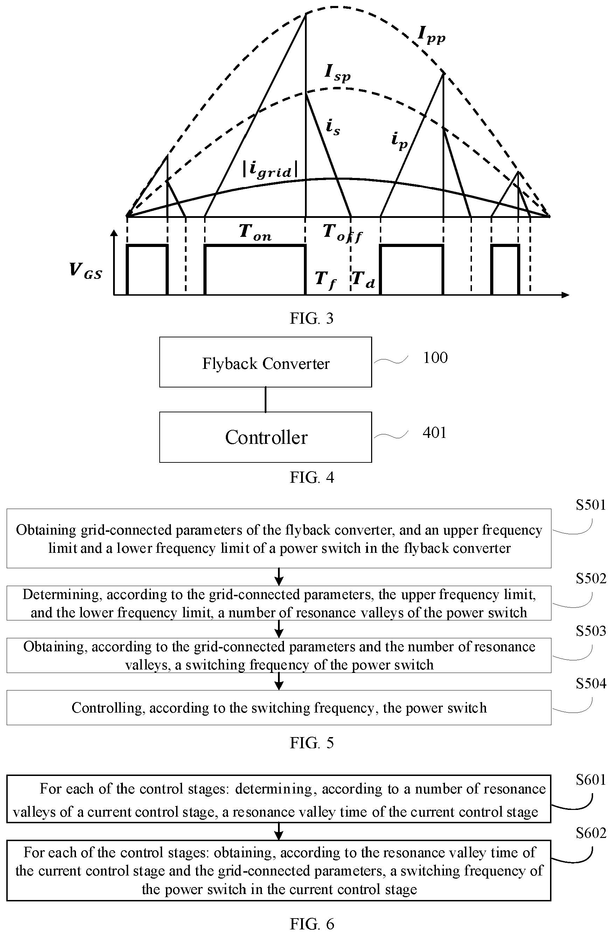

Further, the flyback converter has a boundary conduction mode and a discontinuous conduction mode. FIG. 2 is a schematic diagram showing a boundary conduction mode. As shown in FIG. 2, in the boundary conduction mode, the power switch S1 is turned on immediately when the secondary current *iₛ* of the transformer falls to zero. FIG. 3 is a schematic diagram showing a discontinuous conduction mode. As shown in FIG. 3, in the discontinuous conduction mode, there is a certain dead time between the moment that the power switch S1 is turned on and the secondary current *iₛ* of the transformer falling to zero.

In FIGS. 2 and 3, *Tₒₙ* denotes a turn-on time of the power switch S1, *T_{off}* denotes a turn-off time of the power switch S1, and *T_{f}* denotes a fall time of the power switch S1, which is used to indicate a time required for the secondary current *iₛ* of the transformer to fall to zero. The dead time is equal to the turn-off time *T_{off}. V_{GS}* denotes a gate-source voltage of the power switch S1. The primary-side peak current *Iₚₚ* of the flyback converter and the secondary-side peak current *Iₛₚ* of the flyback converter are each denoted by dotted lines.

It should be noted that the method for determining the turn-on time *Tₒₙ* and the fall time *T_{f}* in formulas (1) and (2) is applicable to the boundary conduction mode and the discontinuous conduction mode. In other words, as long as the primary-side peak current *Iₚₚ* is determined, the turn-on time *Tₒₙ* and the fall time *T_{f}* can be determined.

The following description takes the boundary conduction mode as an example. In the boundary conduction mode, once the secondary current *iₛ* of the transformer decreases to zero, the power switch S1 is turned on immediately, so the turn-off time *T_{off}* of the power switch S1 is equal to the fall time *T_{f}.* The switching period *T_{swBCM}* of the power switch S1 in the boundary conduction mode can be denoted as the following formula (4): ${T}_{swBCM} = {T}_{on} + {T}_{off} = {T}_{on} + {T}_{f}$ (4).

By combining formulas (1), (2), (3) and (4), the primary-side peak current *I_{ppBCM}* in the boundary conduction mode can be determined and denoted as the following formula (5): ${I}_{ppBCM} = 4 {P}_{ref} sin \left({θ}_{grid}\right) \left(\frac{{N}_{sp}}{{V}_{m}}+\frac{sin \left({θ}_{grid}\right)}{{V}_{pv}}\right)$ (5). where *P_{ref}* is a reference value of a grid-connected power, i.e., an effective power of the electricity grid. *P_{ref}* is determined based on a peak value *Vₘ* of the grid voltage and a peak value *Iₘ* of the grid current, and denoted as the following formula (6): ${P}_{ref} = \frac{{V}_{m} {I}_{m}}{2} = {V}_{pv} {I}_{pv}$ (6).

By combining formulas (1), (2), (4) and (5), the switching frequency *f_{swBCM}* of the power switch S1 in the boundary conduction mode can be determined and denoted as the following formula (7): ${f}_{swBCM} = \frac{1}{4 {P}_{ref} {L}_{m} {\left(\frac{{N}_{sp}}{{V}_{m}}+\frac{sin \left({θ}_{grid}\right)}{{V}_{pv}}\right)}^{2}}$ (7).

According to formula (7), when the flyback converter operates in the boundary conduction mode, at a light load, for example, when the grid voltage is near a zero-crossing point, since sin(*θ_{grid}*) is equal to 0, and the denominator in formula (7) is very small, the switching frequency of the power switch S1 will be very high, resulting in a large switching loss of the power switch.

The following description takes the discontinuous conduction mode as an example. In the discontinuous conduction mode, since the power switch S1 is turned on after the secondary current *iₛ* of the transformer falls to zero and a certain dead time, the turn-off time *T_{off}* of the power switch S1 is equal to a sum of the fall time *T_{f}* and a resonance valley time *T_{d},* i.e., *T_{off} = T_{f} + T_{d}.* In other words, the dead time includes the fall time *T_{f}* and the resonance valley time *T_{d}.*

Furthermore, the switching period *T_{swDCM}* of the power switch S1 in the discontinuous conduction mode can be denoted as the following formula (8): ${T}_{swDCM} = {T}_{on} + {T}_{off} = {T}_{on} + {T}_{f} + {T}_{d}$ (8).

If the flyback converter operates in the discontinuous conduction mode at a constant switching frequency *f_{const},* the switching period *T_{const}* of the power switch S1 is denoted as the following formula (9): ${T}_{const} = \frac{1}{{f}_{const}}$ (9).

By combining formulas (1), (2), (3), (8), and (9), the peak current *Iₚₚ* in the discontinuous conduction mode with the constant frequency can be determined, and denoted as the following formula (10): ${I}_{ppDCM} = 2 sin \left({θ}_{grid}\right) \sqrt{\frac{{P}_{ref}}{{f}_{const} ⋅ {L}_{m}}}$ (10).

According to formula (10), if the flyback converter operates in the discontinuous conduction mode with the constant frequency, at a heavy load, for example, when the grid voltage is at its peak, since sin(*θ_{grid}*) is equal to 1, the peak current *Iₚₚ* will be very high, and a current stress of the power switch S1 may increase to an unacceptable level.

It can be seen that the control method for the switching frequency in the conventional art has the problem of low safety. Therefore, to address the above technical problems, it is necessary to provide a control method for the switching frequency. The following will describe the control method for the switching frequency.

FIG. 4 is a diagram showing an application environment of a grid-connected control method for a flyback converter in an embodiment of the present disclosure. The flyback converter 100 communicates with a controller 401. The controller 401 may be, but is not limited to, various personal computers, laptops, smart phones, tablet computers, and portable wearable devices. The portable wearable devices may be smart watches, smart bracelets, head-mounted devices, etc. In addition, the controller 401 may further include, but is not limited to, at least one of a central processing unit (CPU), a digital signal processor (DSP), a field-programmable gate array (FPGA), or other programmable logic devices.

FIG. 5 is a flow diagram showing a grid-connected control method for a flyback converter in an embodiment of the present disclosure. In an exemplary embodiment, as shown in FIG. 5, the grid-connected control method for a flyback converter is provided. The following describes the method by taking the method applied to the controller in FIG. 4 as an example. The method includes the following steps S501 to S503.

In step S501, grid-connected parameters of the flyback converter, and an upper frequency limit and a lower frequency limit of a power switch in the flyback converter are obtained.

In this embodiment, an upper frequency limit *fₘₐₓ* of the power switch and a lower frequency limit *fₘᵢₙ* of the power switch may be values pre-set and stored in the controller, or values sent to the controller by other devices, or values input by a user, and this embodiment is not limited thereto. The upper frequency limit *fₘₐₓ* of the power switch is used to limit the maximum switching frequency of the power switch S1, and the lower switching frequency limit *fₘᵢₙ* is used to limit the minimum switching frequency of the power switch S1.

In some embodiments, the upper frequency limit *fₘₐₓ* of the power switch and the lower frequency limit *fₘᵢₙ* of the power switch are generally determined by the hardware such as a power semiconductor and a transformer in the flyback converter.

The grid-connected parameters refer to power parameters in the flyback converter. The grid-connected parameters may include the power parameter corresponding to the flyback converter during the application process. For example, the grid-connected parameters may include the supply voltage *Vₚᵥ* of the flyback converter, the magnetic inductance *Lₘ* of the transformer in the flyback converter, the primary-side peak current *Iₚₚ* of the flyback converter, the phase angle *θ_{grid}* of the grid voltage, and the like.

Optionally, the controller may obtain the grid-connected parameters from the flyback converter through a sensor, or may receive the grid-connected parameters sent by other devices or input by a user.

In step S502, a number of resonance valleys of the power switch is determined according to the grid-connected parameters, the upper frequency limit, and the lower frequency limit.

With continued reference to FIG. 1, in a case that the power switch S1 is turned off and the secondary current *iₛ* of the transformer decreases to zero, the magnetic inductance *Lₘ* of the transformer T1 and the parasitic capacitance *Cₒₛₛ* of the power switch S1 will form a resonant energy storage circuit. The resonant energy alternates between the magnetic inductance *Lₘ* and the parasitic capacitance *Cₒₛₛ* until the power switch S1 is turned on next time. During this period, due to the impedance in the resonant loop, a drain-source voltage *V_{DS}* of the power switch S1 oscillates in a damped sinusoidal waveform, and a resonance period *Tᵣ* corresponding to the oscillation is denoted as the following formula (10): ${T}_{r} = 2 π \sqrt{{L}_{m} {C}_{oss}}$ (11).

Further, when the drain-source voltage *V_{DS}* of the power switch S1 decreases, the primary-side current *iₚ* is a negative value. At the valley bottom of the drain-source voltage *V_{DS}* of the power switch S1, the primary-side current *iₚ* changes from the negative value to zero. Therefore, if the power switch S1 is turned on at the valley bottom of the drain-source voltage *V_{DS}* of the power switch S1, at the moment of turning on, the instantaneous current can be zero and the voltage can be minimized, so as to minimize the single switching loss. The valley bottom is a point corresponding to a minimum value of a resonance voltage in the resonance period *Tᵣ.*

Furthermore, the resonance period *Tᵣ* can affect a single switching period of the power switch S1, thereby affecting the switching frequency *f_{sw}* of the power switch S1. Therefore, in this embodiment, the controller can control the number m of resonance valleys of the power switch S1, and control the switching frequency of the power switch by adjusting the number m of resonance valleys.

There are *n* resonance periods *Tᵣ* in the m resonance valleys. n denotes the number of resonance periods, and the relationship between n and m is denoted as *n* = m - 1. In this case, when *n* = 0, the number of resonance valleys m is equal to 1; when *n* = 1, the number of resonance valleys m is equal to 2; and when *n* = 2, the number of resonance valleys m is equal to 3. It can be understood that the number of resonance periods is a natural number.

Optionally, the controller may calculate, according to the grid-connected parameters of the flyback converter, the number of resonance valleys of the power switch S1 in a case that the switching frequency of the power switch S1 is not greater than the upper frequency limit and not less than the lower frequency limit.

In some embodiments, the controller can calculate and store a mapping relationship between different grid-connected parameters and different numbers of resonance valleys in advance according to the grid-connected parameters, the upper frequency limit and the lower frequency limit. The mapping relationship is used to indicate the number of resonance valleys corresponding to the case that the switching frequency of the power switch S1 is not less than the lower frequency limit and not greater than the upper frequency limit when operating with the grid-connected parameters. Thus, the controller can determine the number of resonance valleys of the power switch by using the mapping relationship.

In an exemplary embodiment, optionally, the above step S502 may be implemented in the following manner:
determining a number of resonance valleys of the power switch in each of control stages according to the grid-connected parameters, the upper frequency limit and the lower frequency limit.

First, the controller determines the control stages. Each of the control stages includes a certain duration. Each of the control stages can be periodic or non-periodic. The number of resonance valleys in different control stages can be different.

Optionally, the controller may determine the number m of resonance valleys in each of the control stages at the start time of the control stage. For example, t0~t1 is control stage 1, t1~t2 is control stage 2, t2~t3 is control stage 3, and the controller may determine the number m0 of resonance valleys at moment t0, the number m1 of resonance valleys at time t1, the number m2 of resonance valleys at time t2, and so on.

Furthermore, the controller may determine the number of resonance valleys of the power switch S1 in each of the control stages according to the grid-connected parameters, the upper switching frequency limit *fₘₐₓ,* and the lower switching frequency limit *fₘᵢₙ.* For example, at the start time of each of the control stages, the controller may determine the number of resonance valleys of the power switch S1 in a case that the switching frequency of the power switch S1 is not greater than the upper frequency limit and not less than the lower frequency limit according to the grid-connected parameters at the start time.

Since the number of resonance valleys of the power switch in each of the control stages can be determined according to the grid-connected parameters, the upper frequency limit and the lower frequency limit, the number of resonance valleys can be determined efficiently and accurately by using the control stages.

In step S503, a switching frequency of the power switch is obtained according to the grid-connected parameters and the number of resonance valleys.

Optionally, after determining the number of resonance valleys of the power switch S1, the controller may determine the resonance valley time *T_{d}* of the power switch S1 according to the number of resonance valleys, determine the turn-on time *Tₒₙ* and the fall time *T_{f}* according to the grid-connected parameters, and take a reciprocal of *Tₒₙ + T_{f} + T_{d}* as the switching frequency of the power switch S1.

In an exemplary embodiment, on the basis of determining the number of resonance valleys of the power switch in each of the control stages, optionally, the above step S503 may be implemented in the following manner:
obtaining a switching frequency of the power switch in each of the control stages according to the grid-connected parameters and the number of resonance valleys in each of the control stages.

Continuing with the above example, the controller may determine the switching frequency of the power switch S1 in t0~t1 according to the number m0 of resonance valleys and the grid-connected parameters, determine the switching frequency of the power switch S1 in t1~t2 according to the number m1 of resonance valleys and the grid-connected parameters, determine the switching frequency of the power switch S1 in t2~t3 according to the number m2 of resonance valleys and the grid-connected parameters, and so on.

It is understandable that, since some parameters of the grid-connected parameters may change over time, in a case that the number of resonance valleys is constant, the switching frequency of the power switch at different times in the same control stage may also change.

According to the grid-connected parameters and the number of resonance valleys in each of the control stages, the switching frequency of the power switch in each of the control stages can be determined efficiently and accurately based on the number of resonance valleys by using the control stages.

In step S504, the power switch is controlled according to the switching frequency.

Further, after determining the switching frequency of the power switch S1, the power switch S1 may be controlled according to the switching frequency. In other words, the controller may control the power switch S1 to be on or off according to the switching frequency determined in step S503. It can be understood that after controlling the power switch S1 according to the switching frequency, the switching frequency of the power switch S1 may be not less than the lower switching frequency limit and not greater than the upper switching frequency limit.

In the grid-connected control method for the flyback converter described above, since the grid-connected parameters of the flyback converter, the upper frequency limit and the lower frequency limit of the power switch in the flyback converter are obtained, and the number of resonance valleys of the power switch is determined according to the grid-connected parameters, the upper frequency limit and the lower frequency limit, the power switch may be controlled according to the switching frequency after obtaining the switching frequency of the power switch according to the grid-connected parameters and the number of resonance valleys. In addition, since the number of resonance valleys is determined according to the upper frequency limit and the lower frequency limit, the switching frequency can be determined to be not less than the lower frequency limit and not greater than the upper frequency limit, thus solving the problem of the large switching loss caused by excessively high switching frequency in the conventional art. Moreover, since the flyback converter operates at a variable switching frequency, it does not cause large current stress, thereby improving safety.

FIG. 6 is a flow diagram showing a method for determining a switching frequency in an embodiment of the present disclosure. In an exemplary embodiment, as shown in FIG. 6, the above step of obtaining, according to the grid-connected parameters and the number of resonance valleys in each of the control stages, the switching frequency of the power switch in each of the control stages includes the following steps S601 to S602.

In step S601, for each of the control stages, a resonance valley time of a current control stage is determined according to a number of resonance valleys of the current control stage.

In this embodiment, the resonance valley time *T_{d}* may be denoted by the resonance period *Tᵣ,* as shown in the following formula (12). It can be seen that if the number *n* of resonance periods is different, the number m of resonance valleys is different, and the resonance valley time *T_{d}* of the power switch S1 is also different.

Thus, the controller may determine the resonance valley time of the current control stage according to the number of resonance valleys in the current control stage. Taking the control stage 1 as an example, and assuming m0=8, the controller may determine the resonance valley time *T_{d}* of the power switch S1 is equal to (7 + 1/2)*Tᵣ* according to the number m0 of resonance valleys: ${T}_{d} = \left(n+1/2\right) {T}_{r}$ (12).

In step S602, for each of the control stages, a switching frequency of the power switch in the current control stage is obtained according to the resonance valley time of the current control stage and the grid-connected parameters.

Continuing with the above example, after the controller determines the resonance valley time *T_{d}* of the control stage 1, the switching frequency of the power switch S1 in the control stage 1 may be calculated according to the resonance valley time *T_{d}* of the control stage 1 and the grid-connected parameters.

It is understandable that the control stage may include a switching frequency corresponding to at least one moment. For example, the control stage 1 includes moments 1 to 5. The switching frequency at moment 1 may be determined according to the resonance valley time *T_{d}* and the grid-connected parameters corresponding to the moment 1, the switching frequency at moment 2 may be determined according to the resonance valley time *T_{d}* and the grid-connected parameters corresponding to the moment 2, ..., the switching frequency at moment 5 may be determined according to the resonance valley time *T_{d}* and the grid-connected parameters corresponding to the moment 5, and so on.

The calculation principles for other control stages are similar, which will not be described in detail below.

In the above embodiments, for each of the control stages, the resonance valley time of the current control stage may be determined according to the number of resonance valleys in the current control stage, and the switching frequency of the power switch in the current control stage may be obtained according to the resonance valley time of the current control stage and the grid-connected parameters. Therefore, the switching frequency of the power switch may be controlled by the resonance valley time, and the switching frequency can be achieved to be not less than the lower switching frequency limit and not greater than the upper switching frequency limit, thereby improving the control efficiency and accuracy.

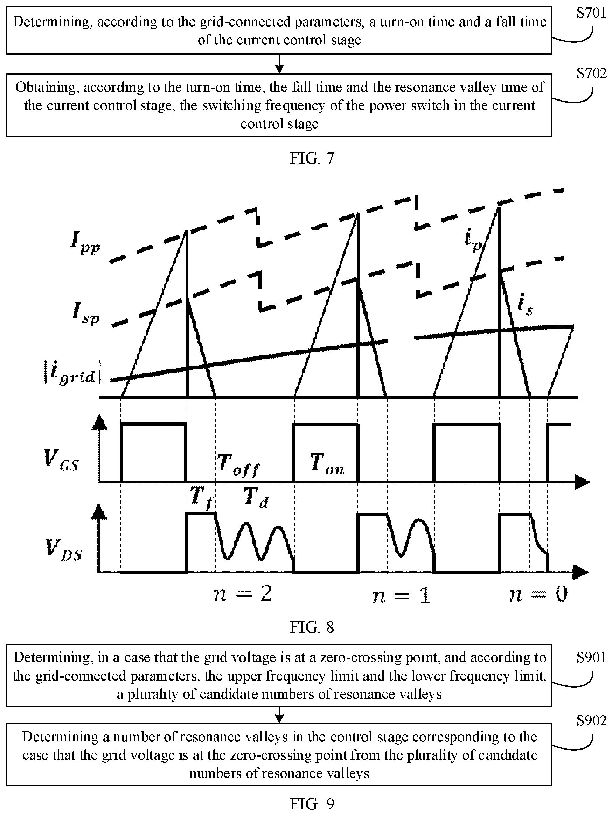

FIG. 7 is a flow diagram showing a method for determining a switching frequency in another embodiment of the present disclosure. In an exemplary embodiment, as shown in FIG. 7, the above step S602 "obtaining, according to the resonance valley time of the current control stage and the grid-connected parameters, the switching frequency of the power switch in the current control stage" includes the following steps S701 to S702.

In step S701, a turn-on time and a fall time of the current control stage are determined according to the grid-connected parameters.

In this embodiment, according to the formula (1) and formula (2), it can be known that the turn-on time *Tₒₙ* and the fall time *T_{f}* of the power switch S1 may be determined after determining the grid-connected parameters. Therefore, the controller may determine the turn-on time *Tₒₙ* and the fall time *T_{f}* of the power switch S1 in the current control stage according to the grid-connected parameters by using the formula (1) and formula (2).

Similarly, the turn-on time and the fall time of the current control stage may change with the grid-connected parameters. For example, the turn-on time *Tₒₙ* corresponding to the moment 1 and the turn-on time *Tₒₙ* corresponding to the moment 2 in the control stage 1 may be different.

In step S702, the switching frequency of the power switch in the current control stage is obtained according to the turn-on time, the fall time and the resonance valley time of the current control stage.

Continuing with the example of the control stage 1, the controller may determine a sum *Tₒₙ + T_{f} + T_{d}* of the turn-on time *Tₒₙ,* the fall time *T_{f},* and the resonance valley time *T_{d}* in the control stage 1, and take a reciprocal of *Tₒₙ + T_{f} + T_{d}* as the switching frequency of the power switch S1 in the control stage 1.

FIG. 8 is a schematic diagram showing a principle of a valley switch in an embodiment of the present disclosure. As shown in FIG. 8, in a case that the primary-side peak current *Iₚₚ* of the flyback converter is determined, the turn-on time *Tₒₙ* and the fall time *T_{f}* of the power switch S1 may be determined, and then the resonance valley time *T_{d}* of the power switch S1 may be controlled by adjusting the number m of resonance valleys of the power switch, so as to control the single switching period of the power switch S1, thereby controlling the switching frequency of the power switch S1. For ease of description, the following number m of resonance valleys is represented by the number *n* of resonance periods. For example, in FIG. 8, the resonance valley time *T_{d}* when the number *n* of resonance periods is 2 is greater than the resonance valley time *T_{d}* when the number *n* of resonance periods is 1, and the resonance valley time *T_{d}* when the number *n* of resonance periods is 1 is greater than the resonance valley time *T_{d}* when the number *n* of resonance periods is 0.

In the above embodiment, the turn-on time and the fall time of the current control stage are determined according to the grid-connected parameters, and the switching frequency of the power switch in the current control stage is obtained according to the turn-on time, the fall time and the resonance valley time of the current control stage. In this way, the switching frequency of the power switch in the current control stage is obtained based on the resonance valley time and the grid-connected parameters of the current control stage, thereby improving the control efficiency for the switching frequency.

In an exemplary embodiment, the above step of "obtaining, according to the grid-connected parameters and the number of resonance valleys in each of the control stages, the switching frequency of the power switch in each of the control stages" may also be implemented in the following manner:
obtaining the switching frequency of the power switch in the current control stage according to the number of resonance valleys of the current control stage and the grid-connected parameters by using a first objective formula.

The first objective formula is denoted as follows: ${f}_{sw} = \frac{1}{{L}_{m} \left[{C}_{2}{I}_{pp}+\left(n+\frac{1}{2}\right){C}_{3}\right]}$;
where the grid-connected parameters include *Lₘ*, *Iₚₚ, P_{ref}, θ_{grid}, Vₚᵥ, Vₘ, Nₛₚ,* and *Cₒₛₛ*; and
*f_{sw}* denotes the switching frequency, *Lₘ* denotes the magnetic inductance of the transformer in the flyback converter, *Iₚₚ* denotes the primary-side peak current of the flyback converter, *n* denotes the number of resonance periods of the flyback converter, *n* = m - 1, m denotes the number of resonance valleys, *C*₁ *= P_{ref}Sin*²(*θ_{grid}*), ${C}_{2} = \frac{1}{{V}_{pv}} + \frac{{N}_{sp}}{{V}_{m} \left|sin\left({θ}_{grid}\right)\right|} , {C}_{3} = 2 π \sqrt{\frac{{C}_{oss}}{{L}_{m}}}$ *, P_{ref}* denotes the effective power of the electricity grid connected to the flyback converter, *θ_{grid}* denotes the phase angle of the grid voltage of the electricity grid, *Vₚᵥ* denotes the supply voltage of the flyback converter, *Vₘ* denotes a peak value of the grid voltage, *Nₛₚ* denotes the turns ratio of the transformer in the flyback converter, and *Cₒₛₛ* denotes the parasitic capacitance of the power switch.

In this embodiment, by combining formulas (1), (2), (3), (8), and (12), the following formula (13) may be obtained: ${I}_{pp} = 2 {C}_{1} {C}_{2} + 2 \sqrt{{\left({C}_{1}{C}_{2}\right)}^{2} + \left(n+\frac{1}{2}\right) {C}_{1} {C}_{3}}$ (13).

*C*₁*, C*₂*,* and *C*₃ in formula (13) satisfy the following formula (14): $\left\{\begin{matrix}{C}_{1} = {P}_{ref} {Sin}^{2} \left({θ}_{grid}\right) , \\ {C}_{2} = \frac{1}{{V}_{pv}} + \frac{{N}_{sp}}{{V}_{m} \left|sin\left({θ}_{grid}\right)\right|} , \\ {C}_{3} = 2 π \sqrt{\frac{{C}_{oss}}{{L}_{m}} ,}\end{matrix}\right.$ (14).

Furthermore, by combining formulas (1), (2), (8), and (13), the switching frequency *f_{sw}* of the power switch S1 can be determined, and denoted as the following formula (15): ${f}_{sw} = \frac{1}{{L}_{m} \left[{C}_{2}{I}_{pp}+\left(n+\frac{1}{2}\right){C}_{3}\right]}$ (15).

The formula (15), i.e., the first objective formula, establishes a relationship between the switching frequency *f_{sw},* the number *n* of resonance periods, and the peak current *Iₚₚ.* In other words, the first objective formula also establishes the relationship between the switching frequency *f_{sw},* the number m of resonance valleys, and the peak current *Iₚₚ.* Therefore, through the first objective formula, the switching frequency of the power switch in the current control stage may be controlled according to the number of resonance valleys and the grid-connected parameters of the power switch in the current control stage. For example, in the control stage 1, n in formula (15) is set equal to (m0-1) to determine the switching frequency *f_{sw}* of the power switch S1 in the control stage 1.

In the above embodiment, by using the first objective formula, the switching frequency of the power switch in the current control stage may be obtained according to the number of resonance valleys and the grid-connected parameters in the current control stage, thereby improving the efficiency of determining the switching frequency.

FIG. 9 is a flow diagram showing a method for determining a number of resonance valleys in an embodiment of the present disclosure. In an exemplary embodiment, as shown in FIG. 9, the above step of "determining, according to the grid-connected parameters, the upper frequency limit and the lower frequency limit, the number of resonance valleys of the power switch in each of control stages" includes the following steps S901 to S902.

In step S901, in a case that the grid voltage is at a zero-crossing point, a plurality of candidate numbers of resonance valleys are determined according to the grid-connected parameters, the upper frequency limit and the lower frequency limit.

Optionally, in the case that the grid voltage is at the zero-crossing point, the controller may determine, based on formula (15), the plurality of candidate numbers of resonance valleys when *θ_{grid} =* 0° and the switching frequency *f_{sw}* is not less than the lower switching frequency limit *fₘᵢₙ* and not greater than the upper switching frequency limit *fₘₐₓ.*

In step S902, the number of resonance valleys in the control stage corresponding to the case that the grid voltage is at the zero-crossing point is determined from the plurality of candidate numbers of resonance valleys.

Thus, after determining the plurality of candidate numbers of resonance valleys, the controller may determine the number m0 of resonance valleys in the first control stage in the case that the voltage is at the zero-crossing point from the candidate numbers of resonance valleys. For example, the candidate numbers of resonance valleys are 8, 7, 6, 5, 4, and 3, respectively, and the computer apparatus may determine that the number of resonance valleys in the control stage 1 may be any one of 8, 7, 6, 5, 4, and 3.

In some embodiments, since the grid current is very small when the grid voltage is near the zero-crossing point, in order to reduce the switching frequency *f_{sw}* by extending the dead time to reduce the switching loss at the light load, the controller may take the largest number of resonance valleys among the candidate numbers of resonance valleys as the number of resonance valleys in the first control stage.

In the above embodiment, in the case that the grid voltage is at the zero-crossing point, the plurality of candidate numbers of resonance valleys are determined according to the grid-connected parameters, the upper frequency limit and the lower frequency limit, and then the number of resonance valleys in the control stage corresponding to the case that the grid voltage is at the zero-crossing point is determined from the candidate numbers of resonance valleys. Therefore, in the case that the grid voltage is at the zero-crossing point, the determined plurality of candidate numbers of resonance valleys can all achieve the switching frequency of the power switch that is not less than the lower frequency limit and not greater than the upper frequency limit, thereby solving the problem of the large switching loss caused by excessively high switching frequency in the conventional art.

In an exemplary embodiment, optionally, the step S901 of "determining, according to the grid-connected parameters, the upper frequency limit and the lower frequency limit, the plurality of candidate numbers of resonance valleys" may be implemented in the following manner:
determining the plurality of candidate numbers of resonance valleys according to the grid-connected parameters, the upper frequency limit, and the lower frequency limit by using a second objective formula.

The second objective formula is denoted as follows: ${f}_{sw} \left({θ}_{grid}\to 0\right) = \frac{1}{{L}_{m} \left[2{P}_{ref}{\left(\frac{{N}_{sp}}{{V}_{m}}\right)}^{2}+\frac{2 {N}_{sp}}{{V}_{m}}\sqrt{{{P}_{ref}}^{2} {\left(\frac{{N}_{sp}}{{V}_{m}}\right)}^{2} + \left(n+\frac{1}{2}\right) {C}_{3} {P}_{ref}}+\left(n+\frac{1}{2}\right){C}_{3}\right]} \leq {f}_{max} .$

In this embodiment, based on formula (15), it is determined that the switching frequency *f_{sw}* of the power switch S1 may be denoted as the following formula (16) in the case that the grid voltage is at the zero-crossing point, i.e., *θ_{grid}* approaches 0: ${f}_{sw} \left({θ}_{grid}\to 0\right) = \frac{1}{{L}_{m} \left[2{P}_{ref}{\left(\frac{{N}_{sp}}{{V}_{m}}\right)}^{2}+\frac{2 {N}_{sp}}{{V}_{m}}\sqrt{{{P}_{ref}}^{2} {\left(\frac{{N}_{sp}}{{V}_{m}}\right)}^{2} + \left(n+\frac{1}{2}\right) {C}_{3} {P}_{ref}}+\left(n+\frac{1}{2}\right){C}_{3}\right]} \leq {f}_{max}$ (16)

For example, the grid voltage is at a zero-crossing point at moment t0. At the moment t0, the controller may determine the plurality of candidate numbers of resonance valleys by solving formula: *fₘᵢₙ* < formula (16) < *fₘₐₓ.*

Further, optionally, after obtaining the candidate numbers of resonance valleys by solving based on the formula (16), the controller may take the smallest positive integer among the candidate numbers of resonance valleys as the number of resonance valleys in the control stage corresponding to the case that the grid voltage is at the zero-crossing point.

In the above embodiment, by using the second objective formula, the plurality of candidate numbers of resonance valleys can be determined according to the grid-connected parameters, the upper frequency limit and the lower frequency limit, so the efficiency of determining the candidate numbers of resonance valleys is improved.

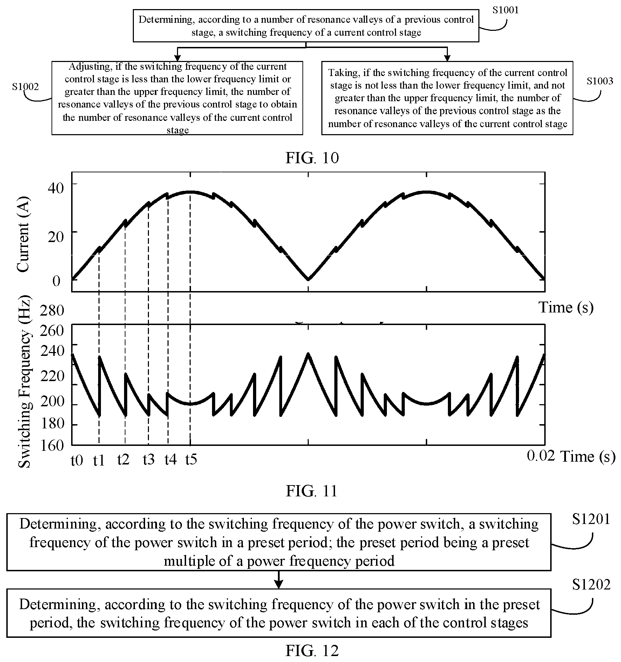

FIG. 10 is a flow diagram showing a method for controlling a switching frequency in an embodiment of the present disclosure. In an exemplary embodiment, as shown in FIG. 10, the above step of "determining, according to the grid-connected parameters, the upper frequency limit and the lower frequency limit, the number of resonance valleys of the power switch in each of control stages" includes the following steps S1001 to S1002.

In step S1001, a switching frequency of the current control stage is determined according to a number of resonance valleys of a previous control stage.

In this embodiment, it can be seen from formula (15) that in a case that the number of resonance valleys is constant, as sin(*θ_{grid}*) increases, the switching frequency *f_{sw}* of the power switch S1 will gradually decrease. Therefore, in order to achieve that the switching frequency *f_{sw}* of the power switch S1 is not less than the lower switching frequency limit *fₘᵢₙ* and not greater than the upper switching frequency limit *fₘₐₓ,* the controller determines the switching frequency of the current control stage according to the number of resonance valleys in the previous control stage. Optionally, the controller may determine the switching frequency of the current control stage according to the grid-connected parameters of the current control stage.

Exemplarily, in a case that the controller calculates the number of resonance valleys in the control stage 1 at moment t0 is m0, for, the control stage 2, the controller may determine the switching frequency of the control stage 2 according to the number m0 of resonance valleys in the control stage 1.

In step S1002, if the switching frequency of the current control stage is less than the lower frequency limit or greater than the upper frequency limit, the number of resonance valleys of the previous control stage is adjusted to obtain the number of resonance valleys of the current control stage.

In this embodiment, in a case that the switching frequency of the current control stage is less than the lower frequency limit or greater than the upper frequency limit, it is indicated that if the number of resonance valleys of the previous control stage is used, the switching frequency of the current control stage will not be able to meet the requirement. Therefore, in order to achieve that the switching frequency of the current control stage is not less than the lower frequency limit and not greater than the upper frequency limit, the controller adjusts the number of resonance valleys of the previous control stage to obtain the number of resonance valleys of the current control stage.

Optionally, the controller may increase or decrease the number of resonance valleys of the previous control stage with a certain compensation until the switching frequency calculated based on the adjusted number of resonance valleys is not less than the lower frequency limit and not greater than the upper frequency limit, and the adjusted number of resonance valleys can be taken as the number of resonance valleys of the current control stage.

It should be noted that the switching frequency in the current control stage is less than the lower frequency limit or greater than the upper frequency limit, including: the switching frequency at any moment in the current control stage is less than the lower frequency limit or greater than the upper frequency limit.

In step S1003, if the switching frequency of the current control stage is not less than the lower frequency limit and not greater than the upper frequency limit, the number of resonance valleys of the previous control stage is taken as the number of resonance valleys of the current control stage.

In this embodiment, in a case that the switching frequency of the current control stage is not less than the lower frequency limit and not greater than the upper frequency limit, it is indicated that the number of resonance valleys of the previous control stage can be used again, so as to achieve that the switching frequency of the current control stage is not less than the lower frequency limit and not greater than the upper frequency limit. Therefore, in order to achieve that the switching frequency of the current control stage is not less than the lower frequency limit and not greater than the upper frequency limit, the number of resonance valleys of the previous control stage may be taken as the number of resonance valleys of the current control stage.

It should be noted that the switching frequency in the current control stage is not less than the lower frequency limit and not greater than the upper frequency limit, including: the switching frequency at any moment in the current control stage is not less than the lower frequency limit and not greater than the upper frequency limit.

FIG. 11 is a schematic diagram showing a control process in an embodiment of the present disclosure. The upper graph in FIG. 11 shows how the primary-side peak current of the flyback converter changes over time, and the lower graph in FIG. 11 shows how the switching frequency of the power switch S1 changes over time.

Continuing with the above example, t0 is the zero-crossing point of the grid voltage. At the moment t0, the controller determines that the number m0 of resonance valleys in control stage 1 is 8 by solving formula: *fₘᵢₙ* < formula (16) < *fₘₐₓ.* In this case, the number n0 of resonance periods is 7.

During the process of t0~t1, as sin(*θ_{grid}*) increases, the switching frequency of the power switch S1 will gradually decrease. At the moment t1, if the power switch S1 constantly operates with the number m0 of resonance valleys being equal to 8, the switching frequency of the power switch S1 will be less than the lower switching frequency limit. Therefore, the controller reduces the number m0 at the moment t1 to obtain the number m1, for example, m1=m0-2=6, in this case, the number n1 of resonance periods is 5.

During the process of t1~t2, as sin(*θ_{grid}*) increases, the switching frequency of the power switch S1 will gradually decrease. At the moment t2, if the power switch S1 constantly operates with the number m1 of resonance valleys being equal to 6, the switching frequency of the power switch S1 will be less than the lower switching frequency limit. Therefore, the controller reduces the number m1 at the moment t2 to obtain the number m2, for example, m2=m1-2=4, in this case, the number n2 of resonance periods is 3, and so on.

It should be noted that the above example is to reduce by 2 each time. When adjusting the number of resonance valleys in the previous control stage, different values may be reduced each time, which is not limited thereto in this embodiment.

In the above embodiment, the switching frequency of the current control stage is determined according to the number of resonance valleys of the previous control stage, and in the case that the switching frequency of the current control stage is less than the lower frequency limit or greater than the upper frequency limit, the number of resonance valleys of the previous control stage is adjusted to obtain the number of resonance valleys of the current control stage. Further, in the case that the switching frequency of the current control stage is not less than the lower frequency limit and not greater than the upper frequency limit, the number of resonance valleys of the previous control stage is taken as the number of resonance valleys of the current control stage. In this way, the switching frequency of the power switch can be achieved to be not less than the lower frequency limit and not greater than the upper frequency limit, thereby improving the safety.

In an exemplary embodiment, optionally, the above step S902 of "adjusting the number of resonance valleys in the previous control stage to obtain the number of resonance valleys in the current control stage" may be implemented in the following manner:
if the phase angle *θ_{grid}* is in *[k* × 180°, *k* × 180° + 90°], reducing the number of resonance valleys in the current control stage to obtain a number of resonance valleys in a next control stage.

If the phase angle *θ_{grid}* is not in *[k* × 180°, *k* × 180° + 90°], the number of resonance valleys in the current control stage is increased to determine the number of resonance valleys in the next control stage.

In this embodiment, *k* is a natural number. The phase angle *θ_{grid}* of the grid voltage generally changes sinusoidally, so the peak current *Iₚₚ* will also change according to the law. Referring to FIG. 11, it can be seen that, taking a 360° as an example, in a case that the phase angle *θ_{grid}* is greater than or equal to 0° and less than or equal to 90°, and in a case that the phase angle *θ_{grid}* is greater than or equal to 180° and less than or equal to 270°, the peak current *Iₚₚ* and the phase angle *θ_{grid}* have a same changing trend, and vice versa, the peak current *Iₚₚ* and the phase angle *θ_{grid}* have opposite changing trends.

In a case that the peak current *Iₚₚ* and the phase angle *θ_{grid}* have the same changing trend, the switching frequency *f_{sw}* of the power switch S1 will gradually decrease, so it is necessary to reduce the number of resonance valleys to reduce the resonance valley time *T_{d}* of the power switch, thereby increasing the switching frequency *f_{sw}* of the power switch S1. Furthermore, in the case that the phase angle *θ_{grid}* is in *[k* × 180°, *k* × 180° + 90°], the controller may reduce the number of resonance valleys in the current control stage to determine the number of resonance valleys in the next control stage. The number of resonance valleys in the previous control stage may be reduced by a first preset value.

In a case that the peak current *Iₚₚ* and the phase angle *θ_{grid}* have the opposite changing trends, the switching frequency *f_{sw}* of the power switch S1 will gradually increase, so it is necessary to increase the number of resonance valleys to increase the resonance valley time *T_{d}* of the power switch, thereby reducing the switching frequency *f_{sw}* of the power switch S1. Furthermore, in the case that the phase angle *θ_{grid}* is not in *[k* × 180°, *k* × 180° + 90°], the controller may increase the number of resonance valleys in the current control stage to determine the number of resonance valleys in the next control stage. The number of resonance valleys in the previous control stage may be increased by a second preset value.

In the above embodiment, k is a natural number, and the electricity grid is connected to the flyback converter. In the case that the phase angle of the grid voltage of the electricity grid is in *[k* × 180°, *k* × 180° + 90°], the number of resonance valleys in the current control stage is reduced to determine the number of resonance valleys in the next control stage. In the case that the phase angle is not in *[k* × 180°, *k* × 180° + 90°], the number of resonance valleys in the current control stage is increased to determine the number of resonance valleys in the next control stage. Therefore, after adjusting the number of resonance valleys in the previous control stage to obtain the number of resonance valleys in the current control stage, the number of resonance valleys in the current control stage can be achieved to be not less than the lower frequency limit and not greater than the upper frequency limit.

FIG. 12 is a flow diagram showing a method for determining a switching frequency in another embodiment of the present disclosure. In an exemplary embodiment, as shown in FIG. 12, the above grid-connected control method for a flyback converter further includes the following steps S1201 to S1202.

In step S1201, a switching frequency of the power switch in a preset period is determined according to the switching frequency of the power switch. The preset period is a preset multiple of a power frequency period.

In this embodiment, the power frequency refers to the frequency of the mains grid. Taking the power frequency being 50 Hz as an example, the power frequency period may be 0.02 seconds. The preset multiple may be any number greater than 0, such as 1/2, 1/4, 1 or 2.

Taking the preset period as 1/4 times the power frequency period as an example, referring to FIG. 11, for example, the controller executes the above process. During the process of t3~t4, as sin(*θ_{grid}*) increases, the switching frequency of the power switch S1 will gradually decrease. At moment t4, if the power switch S1 constantly operates with the number of resonance valleys m3, the switching frequency of the power switch S1 will be less than the lower switching frequency limit. Therefore, the controller reduces n3 to obtain n4 at the moment t4, and the power switch S1 operates with the number of resonance valleys m4 during the process of t4~t5, until *θ_{grid}* = 90°, and sin(*θ_{grid}*) = 1. In this case, the number of resonance valleys in the current control stage is the smallest. In this way, the adjustment of 1/4 times the power frequency period is achieved.

In step S1202, the switching frequency of the power switch in each of the control stages is determined according to the switching frequency of the power switch in the preset period.

Continuing with the above example, since the switching frequency of the power switch within 1/4 times the power frequency period is determined, and the power frequency period has regularity, the switching frequency of the power switch in each of the control stages can be determined according to the switching frequency of the power switch in the preset period. For example, the switching frequency of the power switch in each of the control stages with the phase angle *θ_{grid} of* 0°~360° can be determined by symmetry, replication, and other processing methods.

Referring to FIG. 11, the controller can perform a symmetrical processing on the switching frequency of the power switch in a case that the phase angle *θ_{grid}* is within a range of 0°~90°, i.e., within a first 1/4 times of the power frequency period, to obtain the switching frequency of the power switch in a case that the phase angle *θ_{grid}* is within a range of 90°~180°.

Furthermore, the controller can perform a replication processing on the switching frequency of the power switch in a case that the phase angle *θ_{grid}* is within a range of 0°~180°, i.e., within a first 1/2 times of the power frequency period, to obtain the switching frequency of the power switch in a case that the phase angle *θ_{grid}* is within a range of 180°~360°.

In the above embodiment, the preset period is the preset multiple of the power frequency period. Since the switching frequency of the power switch in the preset period can be determined according to the switching frequency of the power switch, and the switching frequency of the power switch in each of the control stages can be determined according to the switching frequency of the power switch in the preset period, the switching frequency of the power switch in each of the control stages can be determined efficiently and accurately.

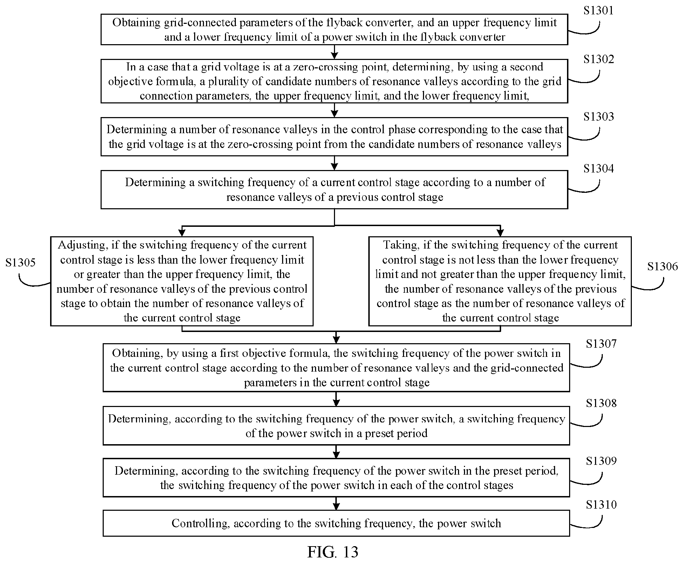

FIG. 13 is a schematic diagram showing a process of a grid-connected control method for a flyback converter in an embodiment of the present disclosure. In an exemplary embodiment, the controller may execute the method according to the following process:

In step S1301, grid-connected parameters of the flyback converter, and an upper frequency limit and a lower frequency limit of a power switch in the flyback converter are obtained.

In step S1302, in a case that a grid voltage is at a zero-crossing point, by using a second objective formula, a plurality of candidate numbers of resonance valleys are determined according to the grid connection parameters, the upper frequency limit, and the lower frequency limit.

In step S1303, a number of resonance valleys in the control phase corresponding to the case that the grid voltage is at the zero-crossing point is determined from the candidate numbers of resonance valleys.

In step S1304, a switching frequency of a current control stage is determined according to a number of resonance valleys of a previous control stage.

In step S1305, if the switching frequency of the current control stage is less than the lower frequency limit or greater than the upper frequency limit, the number of resonance valleys of the previous control stage is adjusted to obtain a number of resonance valleys of the current control stage.

In step S1306, if the switching frequency of the current control stage is not less than the lower frequency limit and not greater than the upper frequency limit, the number of resonance valleys of the previous control stage is taken as the number of resonance valleys of the current control stage.

In step S1307, by using a first objective formula, the switching frequency of the power switch in the current control stage is obtained according to the number of resonance valleys and the grid-connected parameters in the current control stage.

In step S1308, a switching frequency of the power switch in a preset period is determined according to the switching frequency of the power switch.

In step S1309, the switching frequency of the power switch in each of the control stages is determined according to the switching frequency of the power switch in the preset period.

In step S1310, the power switch is controlled according to the switching frequency.

The steps of S1301~S1310 can refer to the embodiments described above, which will not be repeated here. It can be seen that this embodiment provides an efficiency optimization control method based on an extended soft switching range of a flyback converter. According to a mathematical model of multi-valley switches of the flyback converter, the calculation process and control method of the reference peak current and switching frequency controlled by the switch tube are provided. In a case that the flyback converter operates in the discontinuous conduction mode, a number of valleys when the power switch is turned on is calculated according to a grid-connected power and a preset range of the switching frequency.

Table 1 provides simulation parameters of a flyback converter. The frequency of the power switch is simulated and verified according to the parameters in Table 1. In order to adjust the switching frequency of the power switch S1 to be between an upper limit of 250 kHz and a lower limit of 190 kHz, it is calculated, according to formula (16), that the number of resonance periods n is equal to 7, and the number of resonance valleys m is equal to 8 in a case that the grid voltage is at the zero-crossing point. As the instantaneous power increases, when the switching frequency calculated by formula (15) is equal to 190 kHz, the number n of resonance periods n is adjusted to 4, in this case, the number of resonance valleys m is equal to 5. Further, when the switching frequency next reaches the lower limit of 190 kHz, the number of resonance periods n is adjusted to 2, 1, and 0, respectively, and so on.

**Table 1 Simulation Parameters**

| Parameter | Value |
|---|---|
| *P_{ref}* | 200 W |
| *Vₚᵥ* | 40 V |
| *Vₘ* | 311 V |
| *f_{grid}* | 50 Hz |
| *Nₛₚ* | 6 |
| *Lₘ* | 3 uH |
| *Cₒₛₛ* | 328 PF |
| *f_{sw}* | 190 kHz-250 kHz |

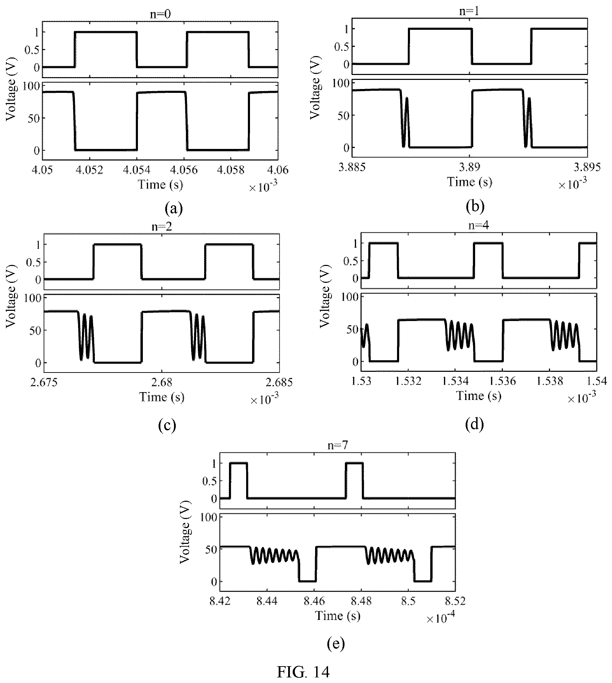

FIG. 14 is a diagram showing a simulation effect in an embodiment of the present disclosure. Figures (a) to (e) in FIG. 14 respectively show waveforms of a driving signal of the power switch S1 and a drain-source voltage *V_{DS}* of the power switch S1 changing with time under different numbers n of resonance periods, i.e., different numbers m of resonance valleys. It can be understood that the waveforms in the upper part of figures (a) to (e) in FIG. 14 are schematic waveforms of driving signals, and the waveforms in the lower part of figures (a) to (e) in FIG. 14 are schematic waveforms of drain-source voltages *V_{DS}.* As shown in FIG. 14, according to the control method of this embodiment, valley switching in the resonance period is achieved under all different load conditions of n=0, 1, 2, 4, or 7.

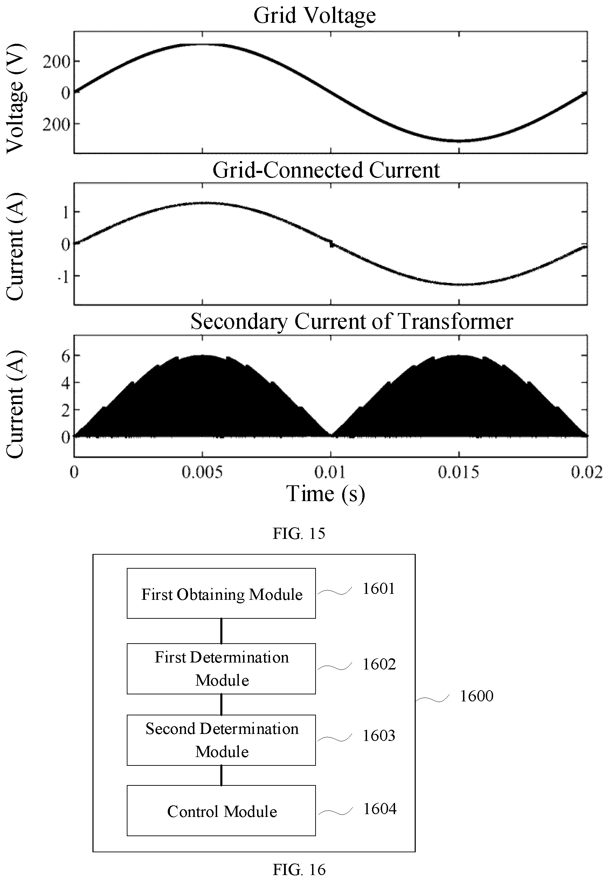

FIG. 15 is a schematic diagram showing an electric power parameter in an embodiment of the present disclosure. FIG. 15 shows how the grid voltage, the grid-connected current and the secondary current *iₛ* of the transformer of the flyback converter vary with time. The principle disclosed by formula (3) can also be verified by referring to FIG. 15.

It should be understood that although the individual steps in the flow diagrams involved of the embodiments as described above are shown sequentially as indicated by arrows, the steps are not necessarily performed sequentially in the order indicated by the arrows. Unless explicitly stated herein, the execution of these steps is not strictly limited in order and these steps can be performed in any other order. Moreover, at least some of the steps in the flow diagrams involved of the embodiments as described above may include a plurality of steps or a plurality of stages that are not necessarily performed at the same time, but may be performed at different times. The order in which these steps or stages are performed is not necessarily sequential, and these steps may be performed alternately or alternately with other steps or at least some of the steps or stages in other steps.

Based on the same inventive concept, embodiments of the present disclosure also provide a grid-connected control device for a flyback converter for implementing the grid-connected control method for a flyback converter as described above. The solution to the problem provided by the apparatus/device is similar to the implementation of the method documented above, so the specific features in the one or more embodiments of the grid-connected control device for a flyback converter provided below may be understood with reference to the features of the grid-connected control method for a flyback converter above and will not be repeated here.

FIG. 16 is a block diagram showing a configuration of a grid-connected control device for a flyback converter in an embodiment of the present disclosure. In an exemplary embodiment, as shown in FIG. 16, a grid-connected control device 1600 for a flyback converter is provided, including: a first obtaining module 1601, a first determination module 1602, a second determination module 1603 and a control module 1604.

The first obtaining module 1601 is configured to obtain grid-connected parameters of the flyback converter, and an upper frequency limit and a lower frequency limit of a power switch in the flyback converter.

The first determination module 1602 is configured to determine, according to the grid-connected parameters, the upper frequency limit, and the lower frequency limit, a number of resonance valleys of the power switch.

The second determination module 1603 is configured to obtain, according to the grid-connected parameters and the number of resonance valleys, a switching frequency of the power switch.

The control module 1604 is configured to control, according to the switching frequency, the power switch.

In some embodiments, the first determination module is specifically configured to:
determine, according to the grid-connected parameters, the upper frequency limit and the lower frequency limit, a number of resonance valleys of the power switch in each of control stages;
obtaining, according to the grid-connected parameters and the number of resonance valleys, the switching frequency of the power switch includes:
   obtaining, according to the grid-connected parameters and the number of resonance valleys in each of the control stages, a switching frequency of the power switch in each of the control stages.

In some embodiments, the first determination module is specifically configured to:
for each of the control stages:
determine, according to a number of resonance valleys of a current control stage, a resonance valley time of the current control stage; and
obtain, according to the resonance valley time of the current control stage and the grid-connected parameters, a switching frequency of the power switch in the current control stage.

In some embodiments, the first determination module is specifically configured to:
determine, according to the grid-connected parameters, a turn-on time and a fall time of the current control stage; and
obtain, according to the turn-on time, the fall time and the resonance valley time of the current control stage, the switching frequency of the power switch in the current control stage.

In some embodiments, the first determination module is specifically configured to:
obtain, by using a first objective formula, and according to the number of resonance valleys of the current control stage and the grid-connected parameters, the switching frequency of the power switch in the current control stage;
where the first objective formula is denoted as follows: ${f}_{sw} = \frac{1}{{L}_{m} \left[{C}_{2}{I}_{pp}+\left(n+\frac{1}{2}\right){C}_{3}\right]}$;
where the grid-connected parameters comprise *Lₘ*, *Iₚₚ, P_{ref}, θ_{grid}, Vₚᵥ, Vₘ, Nₛₚ,* and *Cₒₛₛ*; and
where *f_{sw}* denotes the switching frequency, *Lₘ* denotes a magnetic inductance of a transformer in the flyback converter, *Iₚₚ* denotes a primary-side peak current of the flyback converter, n denotes a number of resonance periods of the flyback converter, *n* = m - 1, m denotes the number of resonance valleys, *C*₁ *= P_{ref}Sin*²(*θ_{grid}*), ${C}_{2} = \frac{1}{{V}_{pv}} + \frac{{N}_{sp}}{{V}_{m} \left|sin\left({θ}_{grid}\right)\right|} , {C}_{3} = 2 π \sqrt{\frac{{C}_{oss}}{{L}_{m}}}$*, P_{ref}* denotes an effective power of an electricity grid connected to the flyback converter, *θ_{grid}* denotes a phase angle of a grid voltage of the electricity grid, *Vₚᵥ* denotes a supply voltage of the flyback converter, *Vₘ* denotes a peak value of the grid voltage, *Nₛₚ* denotes a turns ratio of the transformer in the flyback converter, and *Cₒₛₛ* denotes a parasitic capacitance of the power switch.

In some embodiments, the first determination module is specifically configured to:
determine, according to the grid-connected parameters, the upper frequency limit and the lower frequency limit, a plurality of candidate numbers of resonance valleys in a case that the grid voltage is at a zero-crossing point; and
determine a number of resonance valleys in the control stage corresponding to the case that the grid voltage is at the zero-crossing point from the plurality of candidate numbers of resonance valleys.

In some embodiments, the first determination module is specifically configured to:
determine, by using a second objective formula, the plurality of candidate numbers of resonance valleys according to the grid-connected parameters, the upper frequency limit, and the lower frequency limit;
where the second objective formula is denoted as follows: ${f}_{sw} \left({θ}_{grid}\to 0\right) = \frac{1}{{L}_{m} \left[2{P}_{ref}{\left(\frac{{N}_{sp}}{{V}_{m}}\right)}^{2}+\frac{2 {N}_{sp}}{{V}_{m}}\sqrt{{{P}_{ref}}^{2} {\left(\frac{{N}_{sp}}{{V}_{m}}\right)}^{2} + \left(n+\frac{1}{2}\right) {C}_{3} {P}_{ref}}+\left(n+\frac{1}{2}\right){C}_{3}\right]} \leq {f}_{max} .$

In some embodiments, the first determination module is specifically configured to:
determine, according to a number of resonance valleys of a previous control stage, a switching frequency of a current control stage;
adjust, if the switching frequency of the current control stage is less than the lower frequency limit or greater than the upper frequency limit, the number of resonance valleys of the previous control stage to obtain the number of resonance valleys of the current control stage; and
take, if the switching frequency of the current control stage is not less than the lower frequency limit and not greater than the upper frequency limit, the number of resonance valleys of the previous control stage as the number of resonance valleys of the current control stage.

In some embodiments, the device further includes:
a third determination module configured to determine, according to the switching frequency of the power switch, a switching frequency of the power switch in a preset period; the preset period being a preset multiple of a power frequency period; and
determine, according to the switching frequency of the power switch in the preset period, the switching frequency of the power switch in each of the control stages.

The individual modules in the above grid-connected control device for a flyback converter can be implemented in whole or in part by software, hardware and combinations thereof. Each of the above modules may be embedded in hardware form or independent of a processor in a computer apparatus, or may be stored in software form on a memory in the computer apparatus so that the processor can be called to perform the operations corresponding to each of the above modules.

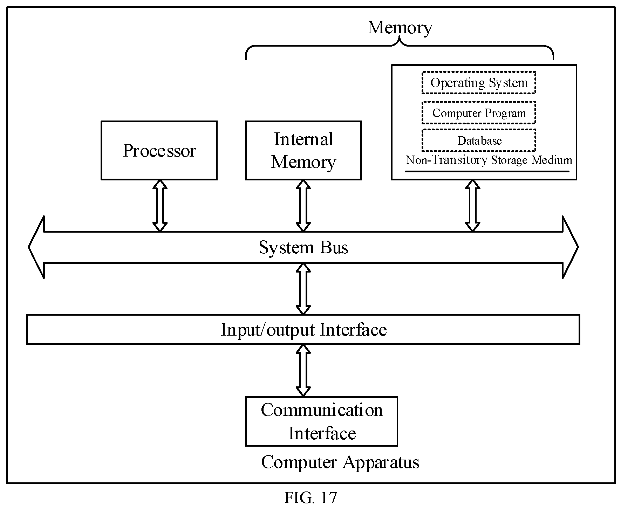

FIG. 17 is a diagram showing an internal configuration of a computer apparatus in an embodiment of the present disclosure. In an exemplary embodiment, a computer apparatus is provided. The computer apparatus may be a server, and its internal configuration may be as shown in FIG. 17. The computer apparatus includes a processor, a memory, an input/output (I/O) interface, and a communication interface. The processor, the memory and the input/output interface are connected via a system bus, and the communication interface is connected to the system bus via the input/output interface. The processor of the computer apparatus is configured to provide computing and control capabilities. The memory of the computer apparatus includes a non-transitory storage medium and an internal memory. The non-transitory storage medium stores operating systems, computer programs and databases. The internal memory provides an environment for the operation of the operating systems and the computer programs in the non-transitory storage medium. The databases of the computer apparatus are configured to store relevant data. The input/output interface of the computer apparatus is configured to exchange information between the processor and external devices. The communication interface of the computer apparatus is configured to communicate with external terminals via a network connection. The computer program, when executed by a processor, causes the processor to implement a grid-connected control method for a flyback converter.

It should be understood by a person of ordinary skill in the art that the configuration illustrated in FIG. 17 is only a block diagram of part of the configuration related to the solution of the present disclosure, and does not constitute a limitation on the computer apparatus to which the solution of the present disclosure is applied. A specific the computer apparatus may include more or less components than those shown in the figure, or may combine some components, or may have a different arrangement of components.

In an embodiment, a computer apparatus is provided, including a processor and a memory storing a computer program. The processor, when executing the computer program, implements the steps in each of the method embodiments described above.

In an embodiment, a computer-readable storage medium is provided, having a computer program stored therein. The computer program, when executed by a processor, causes the processor to implement the steps in each of the method embodiments described above.

In an embodiment, a computer program product is provided, including a computer program. The computer program, when executed by a processor, causes the processor to implement the steps in each of the method embodiments described above.

A person of ordinary skill in the art may understand that implementation of all or part of the processes in the methods of the above embodiments may be completed by instructing the relevant hardware through a computer program. The computer program may be stored in a non-transitory computer-readable storage medium. When the computer program is executed, it may include the processes of the embodiments of the above methods. Any reference to memory, database or other medium used of the embodiments provided in the present disclosure may include at least one of a non-transitory and a transitory memory. The non-transitory memory may include a read-only memory (ROM), a magnetic tape, a floppy disk, a flash memory, an optical memory, a high-density embedded non-transitory memory, a resistive random-access memory (ReRAM), a magneto resistive random-access memory (MRAM), a ferroelectric random-access memory (FRAM), a phase change memory (PCM), or a graphene memory, etc. The transitory memory may include a random-access memory (RAM) or an external cache memory, etc. As an illustration rather than a limitation, the random-access memory may be in various forms, such as a static random-access memory (SRAM) or a dynamic random-access memory (DRAM), etc. The databases involved of the embodiments provided by the present disclosure may include at least one of a relational database and a non-relational database. The non-relational database may include, but is not limited to, a blockchain-based distributed database, etc. The processor involved of the embodiments provided by the present disclosure may be, but is not limited to, a general purpose processor, a central processor, a graphics processor, a digital signal processor, a programmable logic device, a data processing logic device based on quantum computation, and the like.

The technical features in the above embodiments may be combined arbitrarily. For concise description, not all possible combinations of the technical features in the above embodiments are described. However, provided that they do not conflict with each other, all combinations of the technical features are to be considered to be within the scope described in this specification.

The above-mentioned embodiments only describe several implementations of the present disclosure, and their description is specific and detailed, but should not be understood as a limitation on the patent scope of the present disclosure. It should be noted that, for a person of ordinary skill in the art may further make variations and improvements without departing from the conception of the present disclosure, and these all fall within the protection scope of the present disclosure. Therefore, the protection scope of the present disclosure should be subject to the appended claims.

## Claims

1. A grid-connected control method for a flyback converter, the method comprising:
obtaining grid-connected parameters of the flyback converter, and an upper frequency limit and a lower frequency limit of a power switch in the flyback converter;
determining a number of resonance valleys of the power switch according to the grid-connected parameters, the upper frequency limit, and the lower frequency limit;
obtaining a switching frequency of the power switch according to the grid-connected parameters and the number of resonance valleys; and
controlling the power switch according to the switching frequency.

2. The method according to claim 1, wherein determining the number of resonance valleys of the power switch according to the grid-connected parameters, the upper frequency limit, and the lower frequency limit comprises:
determining a number of resonance valleys of the power switch in each of control stages according to the grid-connected parameters, the upper frequency limit and the lower frequency limit;
wherein obtaining the switching frequency of the power switch according to the grid-connected parameters and the number of resonance valleys comprises:
obtaining a switching frequency of the power switch in each of the control stages according to the grid-connected parameters and the number of resonance valleys in each of the control stages.

3. The method according to claim 2, wherein obtaining the switching frequency of the power switch in each of the control stages according to the grid-connected parameters and the number of resonance valleys in each of the control stages comprises:
for each of the control stages:
determining a resonance valley time of the current control stage according to a number of resonance valleys of a current control stage; and
obtaining a switching frequency of the power switch in the current control stage according to the resonance valley time of the current control stage and the grid-connected parameters.

4. The method according to claim 3, wherein obtaining the switching frequency of the power switch in the current control stage according to the resonance valley time of the current control stage and the grid-connected parameters comprises:
determining a turn-on time and a fall time of the current control stage according to the grid-connected parameters; and
obtaining the switching frequency of the power switch in the current control stage according to the turn-on time, the fall time, and the resonance valley time of the current control stage.

5. The method according to claim 2, wherein obtaining the switching frequency of the power switch in each of the control stages according to the grid-connected parameters and the number of resonance valleys in each of the control stages comprises:
obtaining, by using a first objective formula, the switching frequency of the power switch in the current control stage according to the number of resonance valleys of the current control stage and the grid-connected parameters;
wherein the first objective formula is denoted as follows: ${f}_{sw} = \frac{1}{{L}_{m} \left[{C}_{2}{I}_{pp}+\left(n+\frac{1}{2}\right){C}_{3}\right]}$ ;
wherein the grid-connected parameters comprise *Lₘ*, *Iₚₚ, P_{ref}, θ_{grid}, Vₚᵥ, Vₘ, Nₛₚ,* and *Cₒₛₛ*; and
wherein *f_{sw}* denotes the switching frequency, *Lₘ* denotes a magnetic inductance of a transformer in the flyback converter, *Iₚₚ* denotes a primary-side peak current of the flyback converter, n denotes a number of resonance periods of the flyback converter, *n* = m - 1, m denotes the number of resonance valleys, *C*₁ *= P_{ref}Sin*²(*θ_{grid}*), ${C}_{2} = \frac{1}{{V}_{pv}} + \frac{{N}_{sp}}{{V}_{m} \left|sin\left({θ}_{grid}\right)\right|} , {C}_{3} = 2 π \sqrt{\frac{{C}_{oss}}{{L}_{m}}}$, *P_{ref}* denotes an effective power of an electricity grid connected to the flyback converter, *θ_{grid}* denotes a phase angle of a grid voltage of the electricity grid, *Vₚᵥ* denotes a supply voltage of the flyback converter, *Vₘ* denotes a peak value of the grid voltage, *Nₛₚ* denotes a turns ratio of the transformer in the flyback converter, and *Cₒₛₛ* denotes a parasitic capacitance of the power switch.

6. The method according to claim 5, wherein determining the number of resonance valleys of the power switch in each of control stages according to the grid-connected parameters, the upper frequency limit, and the lower frequency limit comprises:
determining, in a case that the grid voltage is at a zero-crossing point, a plurality of candidate numbers of resonance valleys according to the grid-connected parameters, the upper frequency limit, and the lower frequency limit; and
determining a number of resonance valleys in the control stage corresponding to the case that the grid voltage is at the zero-crossing point from the plurality of candidate numbers of resonance valleys.

7. The method according to claim 6, wherein determining the plurality of candidate numbers of resonance valleys according to the grid-connected parameters, the upper frequency limit, and the lower frequency limit comprises:
determining, by using a second objective formula, the plurality of candidate numbers of resonance valleys according to the grid-connected parameters, the upper frequency limit, and the lower frequency limit;
wherein the second objective formula is denoted as follows: ${f}_{sw} \left({θ}_{grid}\to 0\right) = \frac{1}{{L}_{m} \left[2{P}_{ref}{\left(\frac{{N}_{sp}}{{V}_{m}}\right)}^{2}+\frac{2 {N}_{sp}}{{V}_{m}}\sqrt{{{P}_{ref}}^{2} {\left(\frac{{N}_{sp}}{{V}_{m}}\right)}^{2} + \left(n+\frac{1}{2}\right) {C}_{3} {P}_{ref}}+\left(n+\frac{1}{2}\right){C}_{3}\right]} \leq {f}_{max} .$

8. The method according to any one of claims 2 to 7, wherein determining the number of resonance valleys of the power switch in each of control stages according to the grid-connected parameters, the upper frequency limit, and the lower frequency limit comprises:
determining a switching frequency of a current control stage according to a number of resonance valleys of a previous control stage;
adjusting the number of resonance valleys of the previous control stage to obtain the number of resonance valleys of the current control stage if the switching frequency of the current control stage is less than the lower frequency limit or greater than the upper frequency limit; and
taking the number of resonance valleys of the previous control stage as the number of resonance valleys of the current control stage if the switching frequency of the current control stage is not less than the lower frequency limit and not greater than the upper frequency limit.

9. The method according to any one of claims 2 to 7, wherein the method further comprises:
determining a switching frequency of the power switch in a preset period according to the switching frequency of the power switch; the preset period being a preset multiple of a power frequency period; and
determining the switching frequency of the power switch in each of the control stages according to the switching frequency of the power switch in the preset period.

10. A grid-connected control device for a flyback converter, wherein the device comprises:
a first obtaining module configured to obtain grid-connected parameters of the flyback converter, and an upper frequency limit and a lower frequency limit of a power switch in the flyback converter;
a first determination module configured to determine a number of resonance valleys of the power switch according to the grid-connected parameters, the upper frequency limit, and the lower frequency limit;
a second determination module configured to obtain a switching frequency of the power switch according to the grid-connected parameters and the number of resonance valleys; and
a control module configured to control the power switch according to the switching frequency.

11. The device according to claim 10, wherein the first determination module is specifically configured to:
determine a number of resonance valleys of the power switch in each of control stages according to the grid-connected parameters, the upper frequency limit, and the lower frequency limit;
wherein obtaining the switching frequency of the power switch according to the grid-connected parameters and the number of resonance valleys comprises:
obtaining a switching frequency of the power switch in each of the control stages according to the grid-connected parameters and the number of resonance valleys in each of the control stages.

12. The device according to claim **11,** wherein the first determination module is specifically configured to:
for each of the control stages:
determine a resonance valley time of the current control stage according to a number of resonance valleys of a current control stage; and
obtain a switching frequency of the power switch in the current control stage according to the resonance valley time of the current control stage and the grid-connected parameters.

13. The device according to claim 12, wherein the first determination module is specifically configured to:
determine a turn-on time and a fall time of the current control stage according to the grid-connected parameters; and
obtain the switching frequency of the power switch in the current control stage according to the turn-on time, the fall time, and the resonance valley time of the current control stage.

14. The device according to claim **11,** wherein the first determination module is specifically configured to:
obtain, by using a first objective formula, the switching frequency of the power switch in the current control stage according to the number of resonance valleys of the current control stage and the grid-connected parameters;
wherein the first objective formula is denoted as follows: ${f}_{sw} = \frac{1}{{L}_{m} \left[{C}_{2}{I}_{pp}+\left(n+\frac{1}{2}\right){C}_{3}\right]}$;
wherein the grid-connected parameters comprise *Lₘ*, *Iₚₚ, P_{ref}, θ_{grid}, Vₚᵥ, Vₘ, Nₛₚ,* and *Cₒₛₛ*; and
wherein *f_{sw}* denotes the switching frequency, *Lₘ* denotes a magnetic inductance of a transformer in the flyback converter, *Iₚₚ* denotes a primary-side peak current of the flyback converter, n denotes a number of resonance periods of the flyback converter, *n* = m - 1, m denotes the number of resonance valleys, *C*₁ *= P_{ref}Sin*²(*θ_{grid}*), ${C}_{2} = \frac{1}{{V}_{pv}} + \frac{{N}_{sp}}{{V}_{m} \left|sin\left({θ}_{grid}\right)\right|} , {C}_{3} = 2 π \sqrt{\frac{{C}_{oss}}{{L}_{m}}}$*, P_{ref}* denotes an effective power of an electricity grid connected to the flyback converter, *θ_{grid}* denotes a phase angle of a grid voltage of the electricity grid, *Vₚᵥ* denotes a supply voltage of the flyback converter, *Vₘ* denotes a peak value of the grid voltage, *Nₛₚ* denotes a turns ratio of the transformer in the flyback converter, and *Cₒₛₛ* denotes a parasitic capacitance of the power switch.

15. The device according to claim 14, wherein the first determination module is specifically configured to:
determine, in a case that the grid voltage is at a zero-crossing point, a plurality of candidate numbers of resonance valleys according to the grid-connected parameters, the upper frequency limit, and the lower frequency limit; and
determine a number of resonance valleys in the control stage corresponding to the case that the grid voltage is at the zero-crossing point from the plurality of candidate numbers of resonance valleys.

16. The device according to claim 15, wherein the first determination module is specifically configured to:
determine, by using a second objective formula, the plurality of candidate numbers of resonance valleys according to the grid-connected parameters, the upper frequency limit, and the lower frequency limit;
wherein the second objective formula is denoted as follows: ${f}_{sw} \left({θ}_{grid}\to 0\right) = \frac{1}{{L}_{m} \left[2{P}_{ref}{\left(\frac{{N}_{sp}}{{V}_{m}}\right)}^{2}+\frac{2 {N}_{sp}}{{V}_{m}}\sqrt{{{P}_{ref}}^{2} {\left(\frac{{N}_{sp}}{{V}_{m}}\right)}^{2} + \left(n+\frac{1}{2}\right) {C}_{3} {P}_{ref}}+\left(n+\frac{1}{2}\right){C}_{3}\right]} \leq {f}_{max} .$

17. The device according to any one of claims **11** to 16, wherein the first determination module is specifically configured to:
determine a switching frequency of a current control stage according to a number of resonance valleys of a previous control stage;
adjust, if the switching frequency of the current control stage is less than the lower frequency limit or greater than the upper frequency limit, the number of resonance valleys of the previous control stage to obtain the number of resonance valleys of the current control stage; and
take, if the switching frequency of the current control stage is not less than the lower frequency limit and not greater than the upper frequency limit, the number of resonance valleys of the previous control stage as the number of resonance valleys of the current control stage.

18. The device according to any one of claims **11** to 16, wherein the device further comprises:
a third determination module configured to determine a switching frequency of the power switch in a preset period according to the switching frequency of the power switch; the preset period being a preset multiple of a power frequency period; and determine the switching frequency of the power switch in each of the control stages according to the switching frequency of the power switch in the preset period.

19. A computer apparatus comprising a processor and a memory storing a computer program, wherein the processor, when executing the computer program, implements steps of the method of any one of claims 1 to 9.

20. A computer-readable storage medium having a computer program stored therein, wherein when the computer program is executed by a processor, steps of the method of any one of claims 1 to 9 are implemented.
